# FASCICULE DE BREVET EUROPEEN

(11) **EP 3 057 911 B1**
(45) Date de publication et mention de la délivrance du brevet: **01.07.2020**
(21) Numéro de dépôt: 14796822.6
(22) Date de dépôt: 15.10.2014
(51) Int. Cl.: C03C 8/14, C03C 10/00, C03C 8/04, C03C 17/04, C03C 3/093

(54) **ARTICLE VITROCERAMIQUE ET EMAIL POUR SON REVETEMENT**
GLASKERAMISCHER ARTIKEL UND GLASUR ZUR BESCHICHTUNG DAVON
ARTICLE VITROCERAMIQUE ET EMAIL POUR SON REVETEMENT

(30) Priorité: 18.10.2013 FR 1360184
(43) Date de publication de la demande: 24.08.2016
(73) Titulaire: Eurokera S.N.C., 02400 Château-Thierry (FR)
(72) Inventeur: LECOMTE, Emmanuel, F-02400 Nesles la Montagne (FR); VILATO, Pablo, F-75014 Paris (FR)
(74) Mandataire: Saint-Gobain Recherche
(86) Numéro de dépôt international: PCT/FR2014/052630
(87) Numéro de publication internationale: WO 2015/055953

(56) Documents cités:
- EP-A1- 0 879 801
- GB-A- 1 329 609
- GB-A- 2 263 478
- DATABASE WPI Week 199302 Thomson Scientific, London, GB; AN 1993-012005 XP002726643, -& JP H04 338131 A (NIPPON ELECTRIC GLASS CO) 25 novembre 1992 (1992-11-25)

## Description

La présente invention concerne un article en vitrocéramique (également appelé 'article vitrocéramique') destiné par exemple à couvrir ou recevoir des éléments de chauffage (comme une plaque de cuisson, une porte de four, un insert de cheminée, un pare-feu, etc), un procédé d'obtention dudit article, et une nouvelle composition d'émail adaptée pour son revêtement. Par article vitrocéramique on entend un article à base d'un substrat en vitrocéramique, ledit substrat étant le cas échéant muni de revêtement(s) ou d'accessoires ou éléments supplémentaires (décoratifs ou fonctionnels) requis pour son usage final, l'article pouvant désigner tout aussi bien le substrat vitrocéramique seul ou muni de revêtements (par exemple une plaque vitrocéramique de cuisson décorée seule pour montage ultérieur par un équipementier) ou celui muni d'équipements supplémentaires (par exemple une plaque de cuisson munie également de son bandeau de commande, de ses éléments de chauffage, etc.). Par 'composition d'émail adaptée pour son revêtement', on entend principalement 'adaptée pour le revêtement du substrat vitrocéramique formant l'article'.

Il existe plusieurs produits en vitrocéramique d'usage courant, en particulier les plaques de cuisson en vitrocéramique rencontrant un grand succès auprès des ménagistes, fabricants d'électroménagers et utilisateurs. Ce succès s'explique notamment par l'aspect attractif de ces plaques et par leur facilité de nettoyage.

Une vitrocéramique est à l'origine un verre, dit verre précurseur (ou verre-mère ou green-glass), dont la composition chimique spécifique permet de provoquer par des traitements thermiques adaptés, dits de céramisation, une cristallisation contrôlée. Cette structure spécifique en partie cristallisée confère à la vitrocéramique des propriétés uniques.

Il existe actuellement différents types de plaques en vitrocéramique, chaque variante étant le résultat d'études spécifiques et de nombreux essais, étant donné qu'il est très délicat de faire des modifications sur ces plaques et/ou sur leur procédé d'obtention sans risquer un effet défavorable sur les propriétés recherchées : en particulier, pour pouvoir être utilisée comme plaque de cuisson, une plaque vitrocéramique doit généralement présenter une transmission dans les longueurs d'onde du domaine du visible à la fois suffisamment basse pour masquer au moins une partie des éléments de chauffage sous-jacents au repos et suffisamment élevée pour que, selon les cas (chauffage radiant, chauffage par induction, etc), l'utilisateur puisse détecter visuellement les éléments de chauffage en état de marche dans un but de sécurité et/ou puisse lire le cas échéant les afficheurs ; elle doit également présenter une transmission élevée dans les longueurs d'onde du domaine de l'infrarouge dans le cas notamment des plaques à foyers radiants. Les plaques vitrocéramiques doivent également présenter une résistance mécanique suffisante telle qu'exigée dans leur domaine d'utilisation. En particulier pour pouvoir être utilisées comme plaques de cuisson dans le domaine de l'électroménager, les plaques vitrocéramiques doivent présenter une résistance suffisante (telle que définie par exemple selon la norme EN 60335-2-6), en particulier à la pression et aux chocs pouvant survenir (support et chute d'ustensiles, etc.), etc.

La demande de brevet EP 0 879 801 A1 décrit un article vitrocéramique, en particulier une plaque vitrocéramique, ledit article étant revêtu d'au moins une couche d'un émail formé d'une fritte de verre sans plomb et sans cadmium.

Les plaques de cuisson actuelles les plus répandues sont de couleur sombre, en particulier de couleur noire, mais il existe également des plaques d'aspect plus clair (en particulier de couleur blanche, présentant par exemple un flou d'au moins 50% comme décrit dans le brevet FR2766816), voire des plaques transparentes munies de revêtements opacifiants.

Parmi les revêtements (fonctionnels et/ou décoratifs) connus pour les plaques vitrocéramiques, on trouve traditionnellement les émaux, à base de fritte de verre et de pigments, et certaines peintures résistant à haute température, par exemple à base de résines silicones (en particulier à base de résines alkydes silicones, etc.). Les émaux présentent notamment l'avantage de pouvoir être déposés sur le verre précurseur (ou verre-mère ou green-glass) avant céramisation et de pouvoir être cuits lors de la céramisation, et présentent également l'avantage de pouvoir résister à des hautes températures (permettant l'usage de différents moyens de chauffage pour la plaque) ; cependant ils peuvent diminuer localement la résistance mécanique des plaques vitrocéramiques et peuvent s'écailler, notamment pour des dépôts d'épaisseur importante ou en plusieurs passes, certaines couleurs soutenues étant en outre difficiles à obtenir (notamment en une seule passe), la cuisson des émaux provoquant souvent l'apparition de teintes non désirées (par exemple brunes ou grises pour les émaux noirs). En particulier, il est difficile d'obtenir une décoration noire ou blanche soutenue, sans teintes parasites, à la surface des vitrocéramiques, en utilisant des émaux traditionnels.

La peinture, quant à elle, peut s'appliquer en plusieurs couches si besoin est et peut présenter diverses couleurs ; cependant, elle doit être appliquée après céramisation, et nécessite donc une cuisson supplémentaire, et elle reste limitée aux plaques pour foyers à induction (fonctionnant à plus basse température).

Il existe également des revêtements à base de couches réfléchissantes, permettant en particulier d'obtenir, par juxtaposition avec des couches d'émail ou de peinture, des effets de contrastes mat/brillant particulièrement recherchés pour des raisons esthétiques et fonctionnelles (ces contrastes permettant notamment des délimitations de zones), cependant ces revêtements sont plus onéreux car ils nécessitent une installation spécifique, sont généralement limités aux plaques pour foyers à induction, et leur fabrication, effectuée en reprise après céramisation, est plus complexe ou délicate.

Les revêtements existants ont également été mis au point pour les plaques vitrocéramiques les plus répandues jusqu'à présent, ces plaques étant des plaques dites 'affinées à l'arsenic' (c'est-à-dire obtenues à partir d'un verre mère comprenant de l'oxyde d'arsenic à des taux par exemple de l'ordre de 0.5 % à 1.5% en poids). Cependant, de nouvelles formulations de substrats vitrocéramiques ont été récemment développées pour permettre un affinage sans arsenic (avec notamment un taux d'oxyde d'arsenic nul ou inférieur à 0.1%), ceci entrainant une modification de l'interaction avec les revêtements possibles, en particulier avec l'émail cuit, et nécessitant également la mise au point de nouvelles solutions ou revêtements convenant à tous ces substrats quel que soit l'affinant de leur verre-mère.

Le but de la présente invention a été de fournir de nouveaux articles vitrocéramiques (notamment des nouvelles plaques vitrocéramiques destinées par exemple à couvrir ou recevoir des éléments de chauffage telles que des plaques de cuisson) élargissant la gamme des produits existants en mettant au point un revêtement adapté à tout type de vitrocéramique (notamment affinée à l'arsenic ou sans arsenic), ce revêtement permettant d'obtenir de façon économique, simple et efficace des effets ou rendus de couleurs inhabituels ou difficiles ou complexes à obtenir jusqu'à présent (couleurs soutenues et/ou contrastes, etc), à des fins notamment fonctionnelles, en particulier de distinction de zones, et/ou esthétiques, tout en fragilisant le moins possible la vitrocéramique, ce revêtement présentant en outre une bonne tenue (en particulier mécanique, thermique et/ou à l'abrasion) et une bonne pérennité sur l'article revêtu obtenu.

La présente invention concerne ainsi un nouvel article (ou substrat ou produit), tel qu'une plaque, vitrocéramique et un nouvel émail pour vitrocéramiques, ledit article étant au moins en partie revêtu d'au moins une couche dudit émail, cet émail comprenant une (ou étant formé d'une ou à partir d'une) fritte de verre de composition suivante (exprimée en pourcentages pondéraux d'oxydes, les constituants étant communément sous cette forme dans les compositions d'émail) :

| | |
|---|---|
| SiO₂ | 45 - 60% (c'est-à-dire de 45 à 60%), de préférence 50 - 58% |
| Al₂O₃ | 12 - 22%, de préférence 15 - 19% |
| B₂O₃ | 12 - 22 %, de préférence 15 - 19% |
| Li₂O | 0-5%, de préférence > 0 - 5% |
| Na₂O | 0-2% |
| K₂O | > 2% |
| CaO | 0 - 4%, de préférence 0 - 2% |
| MgO | 0 - 4%, de préférence > 0 - 4% |
| ZnO | 0 - 4%, de préférence > 0 - 4% |
| BaO | 0 - 4%, de préférence > 0 - 4% |
| ZrO₂ | 0 - 4%, de préférence 0 - 2%, en particulier > 0 - 2% |
| TiO₂ | 0 - 1 %, de préférence 0 - 0.5% |

la somme des oxydes CaO + MgO +BaO + SrO + ZnO étant en outre inférieure ou égale à 10%, et de préférence étant de 2 à 8%.

La présente invention concerne également la fritte (particules de verre) de composition ci-avant définie, permettant l'élaboration de l'émail et de l'article améliorés selon l'invention, l'émail ainsi élaboré, de composition renfermant (initialement) ladite fritte, notamment l'émail sous sa forme obtenue par cuisson de ladite composition, et l'article en vitrocéramique revêtu (notamment sur une partie d'une face) dudit émail.

La présente invention concerne également un procédé de fabrication d'un article, en particulier d'une plaque, selon l'invention, dans lequel on applique, par exemple par sérigraphie ou jet d'émail, la composition précédente sur l'article de verre précurseur (ou verre-mère ou green glass) avant céramisation, ladite composition étant cuite pendant le cycle de céramisation et/ou dans lequel on applique, par exemple par sérigraphie ou jet d'émail, la composition précédente sur l'article vitrocéramique après céramisation, puis on cuit ladite composition.

La décoration obtenue après cuisson de l'émail sur l'article selon l'invention présente un aspect fonctionnel et esthétique novateur fonction de la couleur du substrat utilisé et de son angle d'observation ; en particulier, l'article selon l'invention présente dans sa ou ses zones de revêtement par l'émail sélectionné une coloration en continuité avec la couleur du substrat (notamment une zone noire intense pour un substrat vitrocéramique noir traditionnel de rendu noir intense), cette coloration se fondant le cas échéant (effet ton sur ton) avec la couleur de la plaque sous certains angles d'observation (par exemple en observant à distance ou à l'aplomb du substrat), l'émail sélectionné offrant également dans le même temps et sous certains angles d'observation un contraste (de type contraste mat ou effet dépoli par rapport au brillant de la plaque notamment et/ou une impression de structuration par rapport à la surface du substrat) avec le reste de la plaque permettant de mettre en évidence et d'identifier des zones (par exemple de commande ou d'affichage ou des limites de zones de chauffe ou des logos) ou de masquer le cas échéant des défauts de la plaque.

Le revêtement obtenu présente ainsi un rendu inhabituel pour les émaux tout en présentant les avantages des émaux ; il peut être cuit lors de la céramisation et peut résister à des hautes températures rendant son utilisation possible avec différents moyens de chauffage pouvant être ajoutés au substrat selon l'invention. En outre, il convient à la fois aux vitrocéramiques traditionnelles affinées à l'arsenic et aux vitrocéramiques affinées sans arsenic, l'effet et les avantages obtenus étant les mêmes dans les deux cas. Il s'adapte ainsi à tout type de vitrocéramique, et présente une bonne résistance mécanique dans tous les cas. D'autres avantages apparaitront également dans la suite de la description.

De préférence, l'article en vitrocéramique selon l'invention est une plaque vitrocéramique, destinée par exemple à couvrir ou recevoir au moins un élément de chauffage, en particulier destinée à servir de plaque de cuisson ou de paroi (en particulier porte ou partie de porte) de four ou d'insert de cheminée ou encore de pare-feu.

L'article selon l'invention peut être à base d'une vitrocéramique affinée à l'arsenic (c'est-à-dire de (verre mère de) composition comprenant de l'ordre de 0.5 % à 1.5% en poids d'oxyde d'arsenic, ou même de composition comprenant entre 0.2 % et 0.5% en poids d'oxyde d'arsenic), ou peut être à base d'une vitrocéramique non affinée à l'arsenic (en particulier présentant un taux d'oxydes d'arsenic (exprimé en As₂O₃) inférieur à 0.2 %, en particulier inférieur à 0.1%, notamment inférieur ou égal à 500 ppm, voire nul).

L'article selon l'invention est avantageusement à base d'une vitrocéramique d'aspect noir, par exemple à base d'une vitrocéramique noire à transmission lumineuse faible, inférieure à 5% (telle que les plaques commercialisées sous le nom Kerablack+ par la société Eurokera) revêtue par la couche d'émail selon l'invention. En particulier, il peut s'agir d'une vitrocéramique affinée à l'arsenic de composition telle que décrite dans la demande de brevet EP0437228 ou US5070045 ou FR2657079, ou avantageusement d'une vitrocéramique présentant un taux d'oxydes d'arsenic (exprimé en As₂O₃) inférieur à 0.2 % (voire inférieur à 0.1%, voire inférieur ou égal à 500 ppm, voire nul), par exemple de composition telle que décrite dans la demande de brevet WO 2012/156444 (ces vitrocéramiques étant d'aspect noir, à transmission lumineuse faible, notamment inférieure à 5%, de préférence comprise entre 0.8 % et 2%, et étant affinées à l'étain).

L'article selon l'invention peut également être de couleur claire, à base d'une vitrocéramique transparente (telle que les plaques commercialisées sous le nom KeraLite par les sociétés Eurokera et Keraglass) ou translucide (telle que les plaques commercialisées sous le nom Kerawhite, KeraWhite TC, Kerabiscuit ou Keravanilla par la société Eurokera), revêtue par la couche d'émail selon l'invention.

La composition de l'émail selon l'invention défini plus avant va maintenant être plus précisément explicitée ci-après. Dans cette composition, les domaines définis pour chacun des composants sont prépondérants pour l'obtention des propriétés et aspects recherchés. Le respect des domaines de la composition permet également de garantir l'élaboration de la fritte à haute température, la tenue mécanique recherchée et la durabilité chimique, etc.

Cette composition d'émail présente un indice de réfraction proche de celui des vitrocéramiques sur lesquelles elle est déposée, la différence entre les deux indices (celui de la vitrocéramique et celui de l'émail obtenu par cuisson étant de préférence inférieure à 0.05 (en valeur absolue) et en particulier inférieure à 0.02 afin notamment d'obtenir le rendu recherché. La fritte de la composition d'émail présente en outre un point de ramollissement faible, notamment inférieur à 800°C permettant un bon nappage de l'émail sur la surface de la vitrocéramique au cours de la céramisation (à des températures généralement entre 900 et 1000°C). En particulier, le taux de B₂O₃ dans la composition de la fritte/de l'émail permet notamment d'atteindre le point de ramollissement recherché tout en évitant des effets d'irisation non souhaitables pouvant survenir à taux élevé, ce composé présentant en outre un faible impact sur l'indice de réfraction, le taux de K₂O contribuant également à diminuer le point de ramollissement de la fritte, avec un taux de TiO₂ parallèlement limité de façon notamment à éviter l'apparition de teintes bleutées.

Outre les constituants évoqués ci-dessus, la composition de la fritte peut le cas échéant renfermer d'autres constituants (par exemple SrO, Fe₂O₃, etc, en particulier sous forme de traces liées au degré de pureté des matières premières) en quantité limitée (par exemple inférieure à 0.1%, voire inférieure à 0.05% notamment pour Fe₂O₃) dans la mesure où ces constituants ne compromettent pas les propriétés recherchées, la composition étant en outre avantageusement exempte de métaux toxiques tels que le plomb, le mercure, le cadmium et le chrome hexavalent.

Outre la fritte de verre (ou particules de verre) de composition précédemment explicitée, l'émail selon l'invention peut également comprendre d'autres composants. Rappelons que les émaux sont généralement formés (avant application sur le substrat et cuisson) d'une poudre comprenant une fritte de verre (devant former la matrice vitreuse) et des pigments (en tant que colorants notamment), la fritte et les pigments étant à base d'oxydes métalliques, et d'un médium ou « véhicule » permettant l'application et l'adhésion préalable de l'émail sur un substrat, ce médium étant destiné à être éliminé au plus tard lors de la cuisson de l'émail.

L'émail peut ainsi comprendre des pigments, ces pigments pouvant être choisis parmi les composés contenant des oxydes métalliques tels que des oxydes de chrome, des oxydes de cuivre, des oxydes de fer, des oxydes de cobalt, des oxydes de nickel, des oxydes de manganèse, des oxydes de cérium, etc, Par exemple, il est possible d'ajouter à la fritte un pigment noir formé d'un mélange d'oxydes de fer, chrome, cobalt et nickel (spinelles Co-Cr-Fe-Ni, tel que celui commercialisé par la société Ferro sous la référence 240137), ou formé d'un mélange d'oxydes de chrome et de cuivre (spinelles Cr-Cu), ou à base de MnO₂, Fe₂O₃ et/ou CoO, etc.

De façon avantageuse cependant, l'émail selon l'invention est généralement formé de la fritte de verre seule (outre le médium présent initialement le cas échéant), c'est-à-dire sans ajout de piments. En d'autres termes, l'émail selon l'invention est généralement et avantageusement dénué de pigments (ajoutés à la fritte), cet ajout de pigments à la fritte étant superflue, voire préjudiciable au but recherché dans la présente invention. En cas d'ajout de pigments à la fritte, le taux desdits pigments est préférentiellement inférieur à 5 % en poids de l'ensemble fritte(s)/pigment(s) de l'émail, afin notamment de ne pas générer de teinte parasite.

La fritte de verre (et les pigments éventuels) se présente(nt) généralement sous forme de poudre avant d'être mis en suspension dans un médium. La granulométrie de la fritte (et des pigments éventuels) sous forme de poudre est préférentiellement choisie de façon à ce qu'au moins 90 % en poids des particules formant la poudre présentent un diamètre inférieur à 15 µm (c'est-à-dire de façon à ce que (les particules de) la fritte et pigments éventuels présente(nt) un D90 inférieur à 15 µm), par exemple de l'ordre de 9-14 µm, voire un diamètre inférieur, notamment inférieur à 4 µm.

La fritte de la composition selon l'invention est classiquement obtenue par fusion à haute température (plus de 1000°C) d'un mélange de matières premières (naturelles ou synthétiques) appropriées. La fritte est ensuite broyée (généralement dans un solvant, tel que l'éthanol, que l'on évapore par la suite) sous forme de poudre, et éventuellement additionnée de pigments (avant et/ou après broyage(s)). Le mélange pulvérulent obtenu (et présentant, après broyage(s) et/ou autre(s) traitement(s) approprié(s), des particules présentant un diamètre moyen D90 inférieur à 15 µm), est, après évaporation le cas échéant du solvant de broyage, par la suite mis en suspension dans un médium afin d'obtenir une composition (pâte) apte à être déposée sur un substrat.

La composition d'émail selon l'invention, sous sa forme prête au dépôt, comprend ainsi également généralement un médium permettant la mise à viscosité désirée pour l'application sur le substrat et permettant la liaison avec le substrat. Ce médium, choisi afin d'assurer une bonne mise en suspension des particules des frittes et pigments éventuels et devant se consumer au plus tard lors de la cuisson de l'émail, peut être tout médium ou liant organique habituellement utilisé dans les compositions d'émail traditionnelles et peut notamment comprendre des solvants, des diluants, des huiles telles que des huiles de pin et autres huiles végétales, des résines telles que des résines acryliques, des fractions de pétrole, des matières filmogènes telles que des matières cellulosiques, etc. La proportion de médium dans la composition prête à être déposée est de préférence comprise entre 40 % et 60 % en poids de ladite composition, de préférence entre 45% et 55 % en poids.

La composition d'émail avant dépôt sur un article, tel qu'une plaque, se présente donc généralement sous forme d'un mélange liquide-solide stable, de consistance pâteuse, de viscosité adaptée au procédé de dépôt (en particulier par sérigraphie).

La couche d'émail déposée sur l'article ou substrat, en particulier la plaque, selon l'invention, couvre une ou plusieurs zones de la surface de la plaque (généralement sur sa face supérieure ou apparente dans la cas d'une plaque, notamment de cuisson) et permet un contraste avec les parties non couvertes de la plaque comme explicité précédemment.

La luminance L* de l'émail est proche de celle de la vitrocéramique sur laquelle elle est déposée en raison notamment de la transparence de l'émail, la différence entre les luminances (celle de la vitrocéramique et celle de l'émail obtenu par cuisson) étant de préférence inférieure à 1 (en valeur absolue) afin notamment d'obtenir le rendu recherché donnant notamment l'impression que la surface de la vitrocéramique est structurée, l'émail et la vitrocéramique semblant constitués d'un même matériau. Les coordonnées colorimétriques L*, a* et b* en réflexion sont mesurées à l'aide d'un colorimètre commercialisé par la société X-rite sous la référence x-rite colorl7.

En outre la brillance B de l'émail défini selon l'invention est plus élevée que celle d'un émail standard intégrant un taux plus élevé de pigments (par exemple de l'ordre de 30%), cette brillance étant en particulier supérieure à 50, de préférence supérieure à 60, et augmentant avec les teneurs en Al₂O₃ et/ou B₂O₃ les plus élevées. La brillance est mesurée sous un angle de 0° (l'illumination étant produite à 45°) avec un appareil commercialisé par la société Byk sous la référence Byk Spectro Guide (la gamme de brillance mesurable étant comprise entre 0 et 100, 100 étant obtenu avec un étalon noir commercialisé par la société Byk sous la référence 6840.

L'épaisseur de la couche d'émail après cuisson (que la cuisson soit opérée pendant la céramisation après dépôt sur verre précurseur, ou soit opérée en reprise après dépôt sur la vitrocéramique, comme explicité ultérieurement) est préférentiellement de 2 µm à 4 µm, en particulier de 2 à 3 µm , par exemple de l'ordre de 2.5 µm , l'épaisseur de la vitrocéramique étant par exemple de l'ordre de 3 - 4 mm dans le cas d'une plaque de cuisson.

Comme indiqué précédemment, le revêtement obtenu présente les avantages des émaux tout en rendant possible sur substrat vitrocéramique une coloration soutenue et/ou assortie avec le substrat et persistant à la cuisson (par exemple une coloration noire intense sur substrat vitrocéramique noir ou un aspect translucide et/ou dépoli très peu teinté sur substrat vitrocéramique blanc) et, selon l'angle d'observation, un effet de contraste par rapport au reste du substrat pouvant mettre en évidence des zones particulières ou procurer un effet esthétique particulier et/ou masquer des défauts du substrat.

L'émail sélectionné selon l'invention et l'article revêtu de cet émail présentent également une bonne tenue thermique compatible avec l'utilisation de divers types de chauffages, résistent à la rayure, à l'abrasion et aux chocs thermiques, présentent une bonne résistance au vieillissement et une résistance mécanique suffisante. Du point de vue du procédé, la composition déposée ne diffère pas d'un émail classique et est totalement compatible avec les lignes de production existantes, en particulier elle peut être appliquée par sérigraphie en utilisant les toiles et machines de sérigraphie habituelles. Par rapport aux couches minces déposées par magnétron, elle est plus économique et, étant isolante électriquement, elle peut être utilisée sans ajustement particulier avec les touches sensitives les plus fréquentes à principe capacitif. Elle est également compatible avec tous types de chauffage (en particulier elle supporte les températures élevées, et convient aux champs magnétiques des bobines d'induction, etc), contrairement aux peintures et le cas échéant aux couches par magnétron, généralement réservées à certains types de chauffage. Elle peut également être déposée dans toute zone de la plaque le cas échéant.

Comme déjà évoqué, la présente invention concerne également le procédé de fabrication des articles, en particulier des plaques, selon l'invention, dans lequel on applique, de préférence par sérigraphie, la composition d'émail selon l'invention sur l'article de verre précurseur (ou verre-mère ou green glass) avant céramisation, ladite composition étant cuite pendant le cycle de céramisation et/ou dans lesquels on applique, de préférence par sérigraphie, ladite composition sur l'article vitrocéramique après céramisation, puis on cuit ladite composition.

Lorsque la cuisson de l'émail est effectuée en reprise (après céramisation, ce mode opératoire étant également appelé procédé avec recuisson), ladite cuisson peut notamment être opérée à une température choisie par exemple dans la gamme de températures entre lesquelles on observe un bon nappage de l'émail, cette gamme de températures se situant notamment entre 700 et 900°C pour les émaux selon l'invention, cette température étant le cas échéant supérieure d'environ 250°C à 300°C par rapport à la température de ramollissement dilatométrique de l'émail (ou plus précisément du verre/de la fritte de verre formant l'émail).

Pour mémoire, la fabrication des plaques vitrocéramiques s'opère généralement comme suit: dans un four de fusion, on fond le verre de composition choisie pour former la vitrocéramique, puis on lamine le verre fondu en un ruban ou feuille standard en faisant passer le verre fondu entre des rouleaux de laminage et on découpe le ruban de verre aux dimensions souhaitées. Les plaques ainsi découpées sont ensuite céramisées de manière connue en soi, la céramisation consistant à cuire les plaques suivant le profil thermique choisi pour transformer le verre en le matériau polycristallin appelé « vitrocéramique » dont le coefficient de dilatation est nul ou quasi-nul et qui résiste à un choc thermique pouvant aller jusqu'à 700°C. La céramisation comprend généralement une étape d'élévation progressive de la température jusqu'au domaine de nucléation, généralement situé au voisinage du domaine de transformation du verre, une étape de traversée en plusieurs minutes de l'intervalle de nucléation, une nouvelle élévation progressive de la température jusqu'à la température du palier de céramisation, le maintien de la température du palier de céramisation pendant plusieurs minutes puis un refroidissement rapide jusqu'à la température ambiante. Le cas échéant, le procédé comprend également une opération de découpe (généralement avant céramisation), par exemple par jet d'eau, traçage mécanique à la molette, etc. suivie par une opération de façonnage (meulage, biseautage,...).

Dans le procédé selon l'invention, la composition précédemment décrite est déposée, soit sur l'article de verre précurseur soit sur l'article en vitrocéramique obtenu après céramisation, généralement sous forme d'une pâte, le dépôt de la couche de composition étant préférentiellement effectué par sérigraphie (le dépôt pouvant néanmoins être effectué par une autre méthode au besoin), l'épaisseur de la couche déposée (ou film humide) étant par exemple de l'ordre de quelques microns (en particulier inférieure ou égale à 8 µm, et généralement inférieure ou égale à 6 µm). Après dépôt de la composition, l'article revêtu est généralement séché (par exemple par infra-rouge ou en étuve), généralement à des températures de l'ordre de 100-150°C, de façon à évaporer le solvant (médium), fixer le revêtement et permettre la manipulation de l'article, résultant en un revêtement séché, puis selon les cas subit un cycle de céramisation traditionnel à haute température (comme évoqué notamment précédemment), la cuisson de la couche accompagnant la transformation du substrat, ou subit une (re)cuisson à une température permettant un bon nappage de l'émail comme explicité précédemment, le temps de cuisson étant adapté en fonction de la température choisie (par exemple augmenté si la température est choisie plus basse), le revêtement obtenu présentant alors une épaisseur généralement de l'ordre de quelques microns (généralement entre 2 et 4 µm , en particulier de 2 à 3 µm).

Lorsque l'article selon l'invention est une plaque, ladite plaque peut le cas échéant comprendre des reliefs et/ou creux et/ou elle peut être munie de (ou associée avec des) élément(s) fonctionnel(s) ou de décor supplémentaire(s) (cadre, connecteur(s), câble(s), élément(s) de commande, afficheur(s), par exemple à diodes électroluminescentes dits « à 7 segments » ou à cristaux liquides, bandeau de commande électronique à touches sensitives et affichage digital, etc.). La plaque selon l'invention peut être montée sur un appareil, à l'intérieur duquel sont disposés le ou les éléments de chauffage, le cas échéant sans complexe intermédiaire visant à masquer l'intérieur de l'appareil à la vue de l'utilisateur.

L'invention concerne aussi les appareils (ou dispositifs) de cuisson et/ou de maintien à haute température comportant au moins un substrat (tel qu'une plaque ou porte) selon l'invention (par exemple cuisinières, tables de cuisson encastrables, fours, etc). L'invention englobe aussi bien des appareils de cuisson comportant une seule plaque que des appareils comportant plusieurs plaques, chacune de ces plaques étant le cas échéant à feu unique ou à feux multiples. Par le terme « feu », on entend un emplacement de cuisson. L'invention concerne également des appareils de cuisson mixtes dont la ou les plaques de cuisson comportent plusieurs types de feux. En outre, l'invention n'est pas limitée à la fabrication de plaques de cuisson pour cuisinières ou tables de cuisson. Les plaques fabriquées conformément à l'invention peuvent également être, comme précisé précédemment, d'autres plaques (inserts de cheminées, pare-feu, etc) devant présenter une grande insensibilité aux variations de température.

Les exemples qui suivent illustrent les résultats obtenus avec les articles vitrocéramiques et émaux selon la présente invention (exemples 1 à 4) en comparaison avec un exemple de référence portant sur des articles vitrocéramiques et émaux antérieurs différents.

Dans ces exemples, on fabrique une plaque vitrocéramique dont une face est lisse (celle devant recevoir la couche d'émail sous forme de motifs aléatoires millimétriques), et l'autre présente des picots (de l'ordre de 40-120 µm de hauteur et de circonférence elliptique de 1.65/1.5 mm) régulièrement répartis, à partir d'un verre non affiné à l'arsenic ayant une composition selon la demande WO2012156444.

Ce verre est fondu aux alentours de 1600-1750°C, en une quantité telle qu'un ruban de verre puisse être laminé, ruban dans lequel des plaques de verre, de dimensions finales 50 cm x 60 cm x 0,4 cm, sont découpées.

Les plaques sont revêtues par sérigraphie sur une partie de leur face supérieure avec une composition d'émail stable sérigraphiable (à base d'une poudre de composition précisée dans chaque exemple, la poudre étant empâtée dans un médium à base de résine acrylique et d'huile de pin commercialisé sous la référence MX54 par la société Ferro en vue de son dépôt sur la plaque et ledit médium se consumant au plus tard lors de la cuisson de l'émail) à l'aide de toiles habituelles en polyester ou polyamide, puis séchées aux alentours de 100-150°C.

Les plaques (green glass ou verre-mère) revêtues d'émail sont ensuite céramisées sur des plateaux céramiques selon un cycle tel que décrit dans la demande de brevet WO2012156444 (vitrocéramiques non affinées à l'arsenic/vitrocéramiques affinées à l'étain)

On obtient des plaques vitrocéramiques revêtues d'une couche d'émail sur une partie, l'épaisseur de la couche d'émail après cuisson étant de l'ordre de 2-3 µm. La partie non revêtue de la plaque est de couleur noire et présente les coordonnées colorimétriques L*, a* et b* suivantes : L*= 24.65, a*= 0.5 et b*= - 0.1. Sa brillance B est de 90.9.

### Exemple de référence :

Dans cet exemple de référence, l'émail utilisé est un émail traditionnel à base d'une poudre comprenant 100% en poids d'une fritte de verre de composition suivante : SiO₂ : 54 % ; Al₂O₃ : 16.8 % ; B₂O₃ : 17.9 % ; Li₂O : 2.85 % ; Na₂O : 0.5 % ; K₂O : 0.2 % ; CaO : 0.5 % ; MgO : 0.3 % ; ZnO : 1.3 % ; BaO : 2.1 % ; ZrO₂ : 1.1 % ; TiO₂ : 2.5%. Les particules de la fritte présentent un D90 de 11.4 et la différence entre l'indice de réfraction de la vitrocéramique et celui de l'émail est de 0.057 en valeur absolue, les indices de réfraction étant considérés à une longueur d'onde de 590 nm. Le revêtement émaillé obtenu après cuisson lors de la céramisation est noir avec une teinte bleutée et présente les coordonnées colorimétriques L*, a* et b* suivantes : L*= 27.4, a*= 0.38 et b*= - 1.97 (valeur caractéristique d'un rendu bleuté). Ce revêtement est en outre peu brillant, la brillance étant de 47.

### Exemple 1 :

Dans ce premier exemple selon l'invention, l'émail utilisé est un émail à base d'une poudre comprenant 100% en poids d'une fritte de verre de composition suivante : SiO₂ : 48.3 % ; Al₂O₃ : 20.9 % ; B₂O₃ : 17.5 % ; Li₂O : 2.7 % ; Na₂O : 0.6 % ; K₂O : 3.0 % ; CaO : 1.1 % ; MgO : 1.7 % ; ZnO : 1.5 % ; BaO : 1.8 % ; ZrO₂ : 0.7 % ; TiO₂ : 0.3%. Les particules de la fritte présentent un D90 de 10.1 µm environ et la différence entre l'indice de réfraction de la vitrocéramique et celui de l'émail est inférieure à 0.02 en valeur absolue, les indices de réfraction étant considérés à une longueur d'onde de 590 nm. Le revêtement émaillé obtenu après cuisson est noir intense et présente les coordonnées colorimétriques L*, a* et b* suivantes: L*= 25.12 (proche de la luminance de la plaque), a*= 0.39 (proche de celui de la vitrocéramique) et b*= - 0.31 (proche de celui de la vitrocéramique). Cet émail est en outre plus brillant qu'un émail traditionnel, sa brillance étant de 69.7. L'émail présente un aspect fondu avec la plaque vitrocéramique sur laquelle il est déposé ou un contraste par rapport au reste de la plaque selon l'angle d'observation.

### Exemple 2 :

Dans ce second exemple selon l'invention, l'émail utilisé est un émail à base d'une poudre comprenant 100% en poids d'une fritte de verre de composition suivante : SiO₂ : 47.6 % ; Al₂O₃ : 17.2 % ; B₂O₃ : 21.6 % ; Li₂O : 2.9 % ; Na₂O : 0.5 % ; K₂O : 3.0 % ; CaO : 1.2 % ; MgO : 1.7 % ; ZnO : 1.6 % ; BaO : 1.8 % ; ZrO₂ : 0.7 % ; TiO₂ : 0.3%. Les particules de la fritte présentent un D90 de 10.1 µm environ et la différence entre l'indice de réfraction de la vitrocéramique et celui de l'émail est inférieure à 0.02 en valeur absolue, les indices de réfraction étant considérés à une longueur d'onde de 590 nm. Le revêtement émaillé obtenu après cuisson est noir intense et présente les coordonnées colorimétriques L*, a* et b* suivantes : L*= 24.81 (très proche de la luminance de la plaque), a*= 0.59 (très proche de celui de la vitrocéramique) et b*= -0.07 (très proche de celui de la vitrocéramique). Cet émail est en outre bien plus brillant qu'un émail traditionnel, sa brillance étant de 79.7. L'émail présente un aspect fondu avec la plaque vitrocéramique sur laquelle il est déposé ou un contraste par rapport au reste de la plaque selon l'angle d'observation.

### Exemple 3 :

Dans cet exemple selon l'invention, l'émail utilisé est un émail à base d'une poudre comprenant 100% en poids d'une fritte de verre de composition suivante : SiO₂ : 55 % ; Al₂O₃ : 17.1 % ; B₂O₃ : 17.1 % ; Li₂O : 2.8 % ; Na₂O : 0.5 % ; K₂O : 2.3 % ; CaO : 0.5 % ; MgO : 0.3 % ; ZnO : 1.3 % ; BaO : 2.2 % ; ZrO₂ : 1.1 %. Les particules de la fritte présentent un D90 de 11.8 µm et la différence entre l'indice de réfraction de la vitrocéramique et celui de l'émail est de 0.017 en valeur absolue, les indices de réfraction étant considérés à une longueur d'onde de 590 nm. Le revêtement émaillé obtenu après cuisson est noir intense et présente les coordonnées colorimétriques L*, a* et b* suivantes : L*= 24.47 (très proche de la luminance de la plaque), a*= 0.56 (très proche de celui de la vitrocéramique) et b*= -0.48 (très proche de celui de la vitrocéramique). Cet émail est en outre plus brillant qu'un émail traditionnel, sa brillance étant de 66.4. L'émail présente un aspect fondu avec la plaque vitrocéramique sur laquelle il est déposé ou un contraste par rapport au reste de la plaque selon l'angle d'observation. En particulier, s'il est déposé sur la plaque sous forme de lignes parallèles de 0.5 - 0.6 mm d'épaisseur et espacées de 0.8 - 0.9 mm les unes par rapport aux autres, l'observateur distingue selon la distance à laquelle il est placé les lignes et/ou une zone mate par rapport aux zones non revêtues ou un aspect unifié. Cet émail est particulièrement avantageux car il permet en outre un meilleur nappage de la vitrocéramique que l'émail de l'exemple 1 et il présente une meilleure résistance chimique que l'émail selon l'exemple 2.

### Exemple 4 :

Dans cet exemple selon l'invention, l'émail utilisé est un émail à base d'une poudre comprenant 100% en poids d'une fritte de verre de composition suivante : SiO₂ : 51.9 % ; Al₂O₃ : 17 % ; B₂O₃ : 17.7 % ; Li₂O : 2.7 % ; Na₂O : 0.6 % ; K₂O : 3 % ; CaO : 1.1 % ; MgO : 1.7 % ; ZnO : 1.5 % ; BaO : 1.8 % ; ZrO₂ : 0.7 % ; TiO₂ : 0.3%. Les particules de la fritte présentent un D90 de 11.5 µm et la différence entre l'indice de réfraction de la vitrocéramique et celui de l'émail est inférieure à 0.02 en valeur absolue, les indices de réfraction étant considérés à une longueur d'onde de 590 nm. Le revêtement émaillé obtenu après cuisson est noir intense et présente les coordonnées colorimétriques L*, a* et b* suivantes : L*= 24.35 (très proche de la luminance de la plaque), a*= 0.48 (très proche de celui de la vitrocéramique) et b*= -0.34 (très proche de celui de la vitrocéramique). Cet émail est en outre plus brillant qu'un émail traditionnel, sa brillance étant de 62.1. L'émail présente un aspect fondu avec la plaque vitrocéramique sur laquelle il est déposé ou un contraste par rapport au reste de la plaque selon l'angle d'observation. Cet émail est particulièrement avantageux car il permet en outre un meilleur nappage de la vitrocéramique que l'émail de l'exemple 1 et il présente une meilleure résistance chimique que l'émail selon l'exemple 2.

Les plaques selon l'invention peuvent notamment être utilisées avec avantages pour réaliser une nouvelle gamme de plaques de cuisson pour cuisinières ou tables de cuisson, ou pour réaliser des éléments de paroi ou des parois (par exemple des portes) de fours, ou pour réaliser des inserts de cheminée ou des pare-feu, etc.

## Revendications

1. Article vitrocéramique, en particulier plaque vitrocéramique destinée par exemple à couvrir ou recevoir au moins un élément de chauffage, ledit article étant au moins en partie revêtu d'au moins une couche d'un émail formé d'une fritte de verre de composition suivante, les proportions étant exprimées en pourcentages pondéraux :
| | |
|---|---|
| SiO₂ | 45 - 60%, de préférence 50 - 58% |
| Al₂O₃ | 12 - 22%, de préférence 15 - 19% |
| B₂O₃ | 12 - 22 %, de préférence 15 - 19% |
| Li₂O | 0-5%, de préférence > 0 - 5% |
| Na₂O | 0-2% |
| K₂O | > 2% |
| CaO | 0 - 4%, de préférence 0 - 2% |
| MgO | 0 - 4%, de préférence > 0 - 4% |
| ZnO | 0 - 4%, de préférence > 0 - 4% |
| BaO | 0 - 4%, de préférence > 0 - 4% |
| ZrO₂ | 0 - 4%, de préférence 0 - 2%, en particulier > 0 - 2% |
| TiO₂ | 0 - 1 %, de préférence 0 - 0.5% |
la somme des oxydes CaO + MgO +BaO + SrO + ZnO étant en outre inférieure ou égale à 10%, et de préférence étant de 2 à 8%.

2. Article vitrocéramique selon la revendication 1, **caractérisé en ce que** l'émail comprend un taux de pigments inférieur à 5% en poids, et avantageusement est dénué de pigments ajoutés à la fritte.

3. Article vitrocéramique selon l'une des revendications 1 ou 2, **caractérisé en ce que** la différence entre l'indice de réfraction de l'émail et celui de la vitrocéramique est inférieure à 0.05 et en particulier inférieure à 0.02.

4. Article vitrocéramique selon l'une des revendications 1 à 3, **caractérisé en ce qu'**il présente un point de ramollissement inférieur à 800°C.

5. Article vitrocéramique selon l'une des revendications 1 à 4, **caractérisé en ce que** la différence entre la luminance de l'émail et celle de la vitrocéramique est inférieure à 1.

6. Article vitrocéramique selon l'une des revendications 1 à 5, **caractérisé en ce que** la brillance B de l'émail est supérieure à 50, de préférence supérieure à 60.

7. Article vitrocéramique selon l'une des revendications 1 à 6, **caractérisé en ce que** la granulométrie de la fritte, et des pigments éventuels, sous forme de poudre est choisie de façon à ce qu'au moins 90 % en poids des particules formant la poudre présentent un diamètre inférieur à 15 µm, par exemple de l'ordre de 9-14 µm , voire un diamètre inférieur, notamment inférieur à 4 µm.

8. Article vitrocéramique selon l'une des revendications 1 à 7, **caractérisé en ce que** l'épaisseur de la couche d'émail est de 2 µm à 4 µm , en particulier de 2 à 3 µm.

9. Article vitrocéramique selon l'une des revendications 1 à 8, **caractérisé en ce que** l'article est formé d'une vitrocéramique comprenant moins de 0.2%, de préférence moins de 0.1%, en poids d'oxydes d'arsenic.

10. Composition d'émail pour article vitrocéramique, formée d'une fritte de verre de composition suivante, les proportions étant exprimées en pourcentages pondéraux :
| | |
|---|---|
| SiO₂ | 45 - 60%, de préférence 50 - 58% |
| Al₂O₃ | 12 - 22%, de préférence 15 - 19% |
| B₂O₃ | 12 - 22 %, de préférence 15 - 19% |
| Li₂O | 0-5%, de préférence > 0 - 5% |
| Na₂O | 0-2% |
| K₂O | > 2% |
| CaO | 0 - 4%, de préférence 0 - 2% |
| MgO | 0 - 4%, de préférence > 0 - 4% |
| ZnO | 0 - 4%, de préférence > 0 - 4% |
| BaO | 0 - 4%, de préférence > 0 - 4% |
| ZrO₂ | 0 - 4%, de préférence 0 - 2%, en particulier > 0 - 2% |
| TiO₂ | 0 - 1 %, de préférence 0 - 0.5% |
la somme des oxydes CaO + MgO +BaO + SrO + ZnO étant en outre inférieure ou égale à 10%, et de préférence étant de 2 à 8%.

11. Composition d'émail selon la revendication 10, **caractérisée en ce que** l'émail comprend un taux de pigments inférieur à 5% en poids, et avantageusement est dénué de pigments ajoutés à la fritte.

12. Procédé de fabrication d'un article vitrocéramique, en particulier selon l'une des revendications 1 à 9, dans lequel on applique la composition selon l'une des revendications 10 ou 11 sur l'article de verre précurseur avant céramisation, ladite composition étant cuite pendant le cycle de céramisation et/ou dans lequel on applique ladite composition sur l'article vitrocéramique après céramisation, puis on cuit ladite composition.

13. Dispositif de cuisson et/ou de maintien à haute température comportant une plaque vitrocéramique selon l'une des revendications 1 à 9 et un ou plusieurs éléments de chauffage.

## Patentansprüche

1. Glaskeramischer Artikel, insbesondere Glaskeramikplatte, die beispielsweise dazu bestimmt ist, mindestens ein Heizelement abzudecken oder aufzunehmen, wobei der Artikel mindestens teilweise mit mindestens einer Schicht aus einer Glasur beschichtet ist, die aus einer Glasfritte mit folgender Zusammensetzung gebildet ist, wobei die Verhältnisse in Gewichtsprozent angegeben sind:
| | |
|---|---|
| SiO₂ | 45 - 60 %, bevorzugt 50 - 58 % |
| Al₂O₃ | 12 - 22 %, bevorzugt 15 - 19 % |
| B₂O₃ | 12 - 22 %, bevorzugt 15 - 19 % |
| Li₂O | 0 - 5 %, bevorzugt > 0 - 5 % |
| Na₂O | 0 - 2 % |
| K₂O | > 2 % |
| CaO | 0 - 4 %, bevorzugt 0 - 2 % |
| MgO | 0 - 4 %, bevorzugt > 0 - 4 % |
| ZnO | 0 - 4 %, bevorzugt > 0 - 4 % |
| BaO | 0 - 4 %, bevorzugt > 0 - 4 % |
| ZrO₂ | 0 - 4 %, bevorzugt 0 - 2 %, insbesondere > 0 - 2 % |
| TiO₂ | 0 - 1 %, bevorzugt 0 - 0,5 % |
wobei die Summe der Oxide CaO + MgO + BaO + SrO + ZnO außerdem kleiner oder gleich 10 % und bevorzugt von 2 bis 8 % ist.

2. Glaskeramischer Artikel nach Anspruch 1, **dadurch gekennzeichnet, dass** die Glasur einen Pigmentgehalt von weniger als 5 Gew.-% umfasst und vorteilhafterweise frei von Pigmenten ist, die der Fritte zugegeben sind.

3. Glaskeramischer Artikel nach einem der Ansprüche 1 oder 2, **dadurch gekennzeichnet, dass** die Differenz zwischen dem Brechungsindex der Glasur und demjenigen der Glaskeramik kleiner als 0,05 und insbesondere kleiner als 0,02 ist.

4. Glaskeramischer Artikel nach einem der Ansprüche 1 bis 3, **dadurch gekennzeichnet, dass** er einen Erweichungspunkt von weniger als 800 °C aufweist.

5. Glaskeramischer Artikel nach einem der Ansprüche 1 bis 4, **dadurch gekennzeichnet, dass** die Differenz zwischen der Leuchtdichte der Glasur und derjenigen der Glaskeramik kleiner als 1 ist.

6. Glaskeramischer Artikel nach einem der Ansprüche 1 bis 5, **dadurch gekennzeichnet, dass** der Glanz B der Brillanz größer als 50, bevorzugt größer als 60 ist.

7. Glaskeramischer Artikel nach einem der Ansprüche 1 bis 6, **dadurch gekennzeichnet, dass** die Korngrößenverteilung der Fritte und der eventuellen Pigmente in Form eines Pulvers derart ausgewählt ist, dass mindestens 90 Gew.-% der Partikel, die das Pulver bilden, einen Durchmesser von weniger als 15 µm aufweisen, z. B. im Bereich von 9 - 14 µm, vorzugsweise einen kleineren Durchmesser, insbesondere kleiner als 4 µm.

8. Glaskeramischer Artikel nach einem der Ansprüche 1 bis 7, **dadurch gekennzeichnet, dass** die Dicke der Glasurschicht von 2 µm bis 4 µm ist, insbesondere von 2 bis 3 µm.

9. Glaskeramischer Artikel nach einem der Ansprüche 1 bis 8, **dadurch gekennzeichnet, dass** der Artikel aus einer Glaskeramik gebildet ist, die weniger als 0,2 Gew.-%, bevorzugt weniger als 0,1 Gew.-% Arsenoxide umfasst.

10. Glasurzusammensetzung für einen Glaskeramikartikel, die aus einer Glasfritte mit folgender Zusammensetzung gebildet ist, wobei die Verhältnisse in Gewichtsprozent angegeben sind:
| | |
|---|---|
| SiO₂ | 45 - 60 %, bevorzugt 50 - 58 % |
| Al₂O₃ | 12 - 22 %, bevorzugt 15 - 19 % |
| B₂O₃ | 12 - 22 %, bevorzugt 15 - 19 % |
| Li₂O | 0 - 5 %, bevorzugt > 0 - 5 % |
| Na₂O | 0 - 2 % |
| K₂O | > 2 % |
| CaO | 0 - 4 %, bevorzugt 0 - 2 % |
| MgO | 0 - 4 %, bevorzugt > 0 - 4 % |
| ZnO | 0 - 4 %, bevorzugt > 0 - 4 % |
| BaO | 0 - 4 %, bevorzugt > 0 - 4 % |
| ZrO₂ | 0 - 4 %, bevorzugt 0 - 2 %, insbesondere > 0 - 2 % |
| TiO₂ | 0 - 1 %, bevorzugt 0 - 0,5 % |
wobei die Summe der Oxide CaO + MgO + BaO + SrO + ZnO außerdem kleiner oder gleich 10 % und bevorzugt von 2 bis 8 % ist.

11. Glasurzusammensetzung nach Anspruch 10, **dadurch gekennzeichnet, dass** die Glasur einen Pigmentgehalt von weniger als 5 Gew.-% umfasst und vorteilhafterweise frei von Pigmenten ist, die der Fritte zugegeben sind.

12. Verfahren zur Herstellung eines Glaskeramikartikels, insbesondere nach einem der Ansprüche 1 bis 9, bei dem die Zusammensetzung nach einem der Ansprüche 10 bis 11 auf den Vorläuferglasartikel vor der Keramisierung aufgebracht wird, wobei die Zusammensetzung während des Keramisierungszyklus gebrannt wird, und/oder bei dem die Zusammensetzung auf den Glaskeramikartikel nach der Keramisierung aufgebracht wird und die Zusammensetzung anschließend gebrannt wird.

13. Vorrichtung zum Kochen und/oder Halten auf hoher Temperatur, umfassend eine Glaskeramikplatte nach einem der Ansprüche 1 bis 9 und ein oder mehrere Heizelemente.

## Claims

1. A glass-ceramic article, in particular a glass-ceramic plate intended, for example, for covering or receiving at least one heating element, said article being at least partly coated with at least one layer of an enamel formed from a glass frit having the following composition, the proportions being expressed as weight percentages:
| | |
|---|---|
| SiO₂ | 45 - 60%, preferably 50 - 58% |
| Al₂O₃ | 12 - 22%, preferably 15 - 19% |
| B₂O₃ | 12 - 22%, preferably 15 - 19% |
| Li₂O | 0 - 5%, preferably > 0 - 5% |
| Na₂O | 0-2% |
| K₂O | > 2% |
| CaO | 0 - 4%, preferably 0 - 2% |
| MgO | 0 - 4%, preferably > 0 - 4% |
| ZnO | 0 - 4%, preferably > 0 - 4% |
| BaO | 0 - 4%, preferably > 0 - 4% |
| ZrO₂ | 0 - 4%, preferably 0 - 2%, in particular > 0 - 2% |
| TiO₂ | 0 - 1 %, preferably 0 - 0.5% |
the sum of the oxides CaO + MgO + BaO + SrO + ZnO moreover being less than or equal to 10%, and preferably being from 2 to 8%.

2. The glass-ceramic article as claimed in claim 1, **characterized in that** the enamel comprises a pigment content of less than 5% by weight, and advantageously is devoid of pigments added to the frit.

3. The glass-ceramic article as claimed in either of claims 1 and 2, **characterized in that** the difference between the refractive index of the enamel and that of the glass-ceramic is less than 0.05 and in particular less than 0.02.

4. The glass-ceramic article as claimed in one of claims 1 to 3, **characterized in that** it has a softening point of less than 800°C.

5. The glass-ceramic article as claimed in one of claims 1 to 4, **characterized in that** the difference between the lightness of the enamel and that of the glass-ceramic is less than 1.

6. The glass-ceramic article as claimed in one of claims 1 to 5, **characterized in that** the brightness B of the enamel is greater than 50, preferably greater than 60.

7. The glass-ceramic article as claimed in one of claims 1 to 6, **characterized in that** the particle size distribution of the frit, and of the optional pigments, in powder form is chosen so that at least 90% by weight of the particles forming the powder have a diameter of less than 15 µm, for example of the order of 9-14 µm, or even a smaller diameter, in particular of less than 4 µm.

8. The glass-ceramic article as claimed in one of claims 1 to 7, **characterized in that** the thickness of the enamel layer is from 2 µm to 4 µm, in particular from 2 µm to 3 µm.

9. The glass-ceramic article as claimed in one of claims 1 to 8, **characterized in that** the article is formed from a glass-ceramic comprising less than 0.2%, preferably less than 0.1 %, by weight of arsenic oxides.

10. An enamel composition for a glass-ceramic article, formed from a glass frit having the following composition, the proportions being expressed as weight percentages:
| | |
|---|---|
| SiO₂ | 45 - 60%, preferably 50 - 58% |
| Al₂O₃ | 12 - 22%, preferably 15 - 19% |
| B₂O₃ | 12 - 22%, preferably 15 - 19% |
| Li₂O | 0 - 5%, preferably > 0 - 5% |
| Na₂O | 0-2% |
| K₂O | > 2% |
| CaO | 0 - 4%, preferably 0 - 2% |
| MgO | 0 - 4%, preferably > 0 - 4% |
| ZnO | 0 - 4%, preferably > 0 - 4% |
| BaO | 0 - 4%, preferably > 0 - 4% |
| ZrO₂ | 0 - 4%, preferably 0 - 2%, in particular > 0 - 2% |
| TiO₂ | 0 - 1 %, preferably 0 - 0.5% |
the sum of the oxides CaO + MgO + BaO + SrO + ZnO moreover being less than or equal to 10%, and preferably being from 2 to 8%.

11. The enamel composition as claimed in claim 10, **characterized in that** the enamel comprises a pigment content of less than 5% by weight, and advantageously is devoid of pigments added to the frit.

12. A process for manufacturing a glass-ceramic article, in particular as claimed in one of claims 1 to 9, wherein the composition as claimed in either of claims 10 and 11 is applied to the precursor glass article before ceramization, said composition being fired during the ceramization cycle and/or wherein said composition is applied to the glass-ceramic article after ceramization, then said composition is fired.

13. A device for cooking and/or for maintaining at high temperature, comprising a glass-ceramic plate as claimed in one of claims 1 to 9 and one or more heating elements.
